# EUROPEAN PATENT APPLICATION

(11) **EP 4 676 019 A1**
(43) Date of publication of application: **07.01.2026**
(21) Application number: 24763658.2
(22) Date of filing: 16.02.2024
(51) Int. Cl.: H04N 5/222, G09G 5/00, G09G 5/37, G09G 5/377, H04N 5/265, H04N 23/63

(54) **IMAGE PROCESSING DEVICE AND IMAGE PROCESSING METHOD, VIRTUAL STUDIO SYSTEM, AND IMAGING DEVICE**

(30) Priority: 27.02.2023 JP 2023028845
(71) Applicant: Canon Kabushiki Kaisha, Tokyo, 146-8501 (JP)
(72) Inventor: ONO, Tadayoshi, Tokyo 146-8501 (JP)
(74) Representative: TBK
(86) International application number: PCT/JP2024/005578
(87) International publication number: WO 2024/181175

(57) **Abstract**

An image processing apparatus capable of assisting capture of in-camera VFX video while recognizing what a background image outside a shooting area is, is disclosed. The image processing apparatus causes a part of a first image that is based on a viewpoint of an image capture apparatus to be displayed on a display device. The image processing apparatus further outputs, to an external device different from the display device, a second image, which is a part of the first image, that includes a portion of the first image corresponding to a captured area captured by the image capture apparatus and that has a greater field of view than the captured area.

## Description

### TECHNICAL FIELD

The present invention relates to an image processing apparatus, an image processing method, a virtual studio system, and an image capture apparatus.

### BACKGROUND ART

A method is known in which Visual Effects (VFX) video is obtained without combining a background image with live-action video, by displaying an image that is based on the position and orientation of a camera on a large-format display device and capturing images of a subject using the displayed image as a background (Patent Literature (PTL) 1). Video obtained through such a method is called "in-camera VFX video".

### CITATION LIST

### PATENT LITERATURE

PTL 1: Japanese Patent No. 7190594

### SUMMARY OF INVENTION

### TECHNICAL PROBLEM

When shooting in-camera VFX video, the background image displayed on the display device changes in accordance with changes in the position and orientation of the camera. In other words, what is displayed on the display device is a part of the background image. On the other hand, what is displayed on a display device provided in the camera is an image of a captured area, which is an even smaller part of the background image. It is therefore not easy to capture image while recognizing what the background image outside the shooting area is. Furthermore, it has been impossible to recognize what is in the regions of the background image not displayed on the display device.

Accordingly, the present invention in one aspect provides an image processing apparatus and an image processing method capable of assisting capture of in-camera VFX video while recognizing what a background image outside a shooting area is.

### SOLUTION TO PROBLEM

The present invention in one aspect provides an image processing apparatus characterized by including: generating means for generating a first image that is based on a viewpoint of an image capture apparatus; display control means for displaying, on a display device, a part of the first image as a background image in a space captured by the image capture apparatus; and output means for outputting, to an external device different from the display device, a second image that includes a portion of the first image corresponding to a captured area captured by the image capture apparatus and that has a greater field of view than the captured area.

### ADVANTAGEOUS EFFECTS OF INVENTION

According to one aspect of the present invention, an image processing apparatus and an image processing method can be provided which are capable of assisting capture of in-camera VFX video while recognizing what a background image outside a shooting area is.

Other features and advantages of the present invention will be apparent from the following description taken in conjunction with the accompanying drawings. Note that the same reference numerals denote the same or like components throughout the accompanying drawings.

### BRIEF DESCRIPTION OF DRAWINGS

The accompanying drawings, which are incorporated in and constitute a part of the specification, illustrate embodiments of the invention and, together with the description, serve to explain principles of the invention.
FIG. 1 is a block diagram illustrating an example of the functional configuration of an image capture apparatus according to embodiments.
FIG. 2 is a diagram schematically illustrating a virtual studio system according to a first embodiment.
FIG. 3 is a block diagram illustrating an example of the functional configuration of a display control apparatus according to embodiments.
FIG. 4A is a flowchart pertaining to operations by a display control apparatus according to the first embodiment.
FIG. 4B is a flowchart pertaining to operations by the display control apparatus according to the first embodiment.
FIG. 5 is a flowchart pertaining to operations by an image capture apparatus according to the first embodiment.
FIG. 6A is a diagram illustrating operations by the display control apparatus and the image capture apparatus according to the first embodiment.
FIG. 6B is a diagram illustrating operations by the display control apparatus and the image capture apparatus according to the first embodiment.
FIG. 6C is a diagram illustrating operations by the display control apparatus and the image capture apparatus according to the first embodiment.
FIG. 7A is a diagram illustrating operations by the display control apparatus and the image capture apparatus according to the first embodiment.
FIG. 7B is a diagram illustrating operations by the display control apparatus and the image capture apparatus according to the first embodiment.
FIG. 8 is a diagram schematically illustrating a state in which an image capture direction has changed from that illustrated in FIG. 2.
FIG. 9A is a diagram illustrating operations by the display control apparatus and the image capture apparatus according to the first embodiment.
FIG. 9B is a diagram illustrating operations by the display control apparatus and the image capture apparatus according to the first embodiment.
FIG. 9C is a diagram illustrating operations by the display control apparatus and the image capture apparatus according to the first embodiment.
FIG. 10A is a diagram illustrating operations by the display control apparatus and the image capture apparatus according to the first embodiment.
FIG. 10B is a diagram illustrating operations by the display control apparatus and the image capture apparatus according to the first embodiment.
FIG. 11A is a flowchart pertaining to operations by the display control apparatus according to a second embodiment.
FIG. 11B is a flowchart pertaining to operations by the display control apparatus according to the second embodiment.
FIG. 12 is a diagram schematically illustrating a virtual studio system according to the second embodiment.
FIG. 13A is a diagram illustrating operations by the display control apparatus and the image capture apparatus according to the second embodiment.
FIG. 13B is a diagram illustrating operations by the display control apparatus and the image capture apparatus according to the second embodiment.
FIG. 13C is a diagram illustrating operations by the display control apparatus and the image capture apparatus according to the second embodiment.
FIG. 14A is a diagram illustrating operations by the display control apparatus and the image capture apparatus according to the second embodiment.
FIG. 14B is a diagram illustrating operations by the display control apparatus and the image capture apparatus according to the second embodiment.
FIG. 15 is a diagram schematically illustrating a state in which a viewing direction of an HMD has changed from that illustrated in FIG. 12.
FIG. 16A is a diagram illustrating operations by the display control apparatus and the image capture apparatus according to the second embodiment.
FIG. 16B is a diagram illustrating operations by the display control apparatus and the image capture apparatus according to the second embodiment.
FIG. 17 is a diagram schematically illustrating a state in which an image capture direction and a viewing direction of an HMD have changed from those illustrated in FIG. 15.
FIG. 18A is a diagram illustrating operations by the display control apparatus and the image capture apparatus according to the second embodiment.
FIG. 18B is a diagram illustrating operations by the display control apparatus and the image capture apparatus according to the second embodiment.
FIG. 18C is a diagram illustrating operations by the display control apparatus and the image capture apparatus according to the second embodiment.
FIG. 19A is a diagram illustrating operations by the display control apparatus and the image capture apparatus according to the second embodiment.
FIG. 19B is a diagram illustrating operations by the display control apparatus and the image capture apparatus according to the second embodiment.

### DESCRIPTION OF EMBODIMENTS

Hereinafter, the present invention will be described in detail based on example embodiments thereof, with reference to the accompanying drawings. Note that the following embodiments do not limit the invention as set forth in the scope of patent claims. Additionally, although several features are described in the embodiments, all of these features are not necessarily required for the invention, and multiple features may be combined as desired. Furthermore, in the accompanying drawings, the same or similar configurations are given the same reference numerals, and redundant descriptions thereof will be omitted.

The following embodiments will describe a case where the present invention is applied in an image capture apparatus, which is an example of an image processing apparatus. However, an image capture function is not essential to the present invention, and the present invention can be implemented in any electronic device. Examples of such an electronic device include computer devices (personal computers, tablet computers, media players, PDAs, and the like), mobile phones, smartphones, and game consoles. These are merely examples, however, and the present invention can be applied in other electronic devices as well.

### First Embodiment

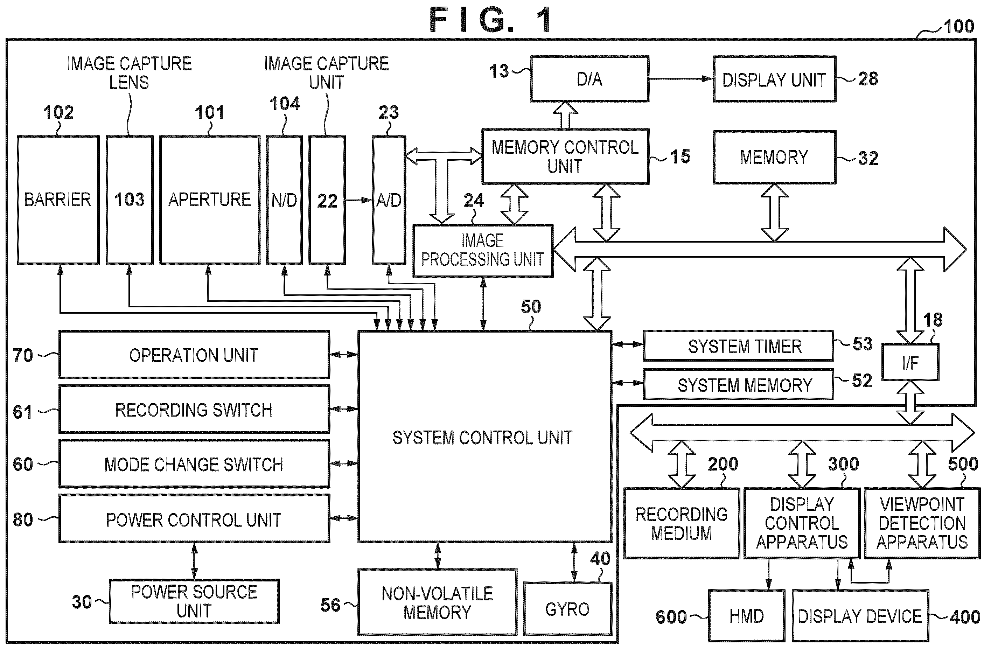

FIG. 1 is a block diagram illustrating an example of the configuration of a virtual studio system for capturing in-camera VFX video, focusing on an example of the functional configuration of an image capture apparatus 100. The virtual studio system includes at least the image capture apparatus 100, a display control apparatus 300 that generates a background image that is based on a three-dimensional position and orientation of the image capture apparatus 100, and a display device 400 that displays the background image in a space captured by the image capture apparatus 100. A configuration in which a viewpoint detection apparatus 500 detects the three-dimensional position and orientation of the image capture apparatus 100 and supplies that information to the display control apparatus 300 is illustrated here. However, the configuration may be such that the image capture apparatus 100 supplies its own three-dimensional position and orientation to the display control apparatus 300. A head-mounted display device (HMD) 600 is optional.

The image capture apparatus 100 may be any apparatus capable of capturing a moving image, and is assumed here to be a digital video camera. An image capture lens 103 is a lens group including movable lenses such as a zoom lens, a focus lens, and a shift lens, and forms a subject image on an image capture surface. A system control unit 50 (described later) is capable of obtaining and adjusting the position of the movable lens of the image capture lens 103. A barrier 102 is capable of opening and closing, and protects the image capture lens 103. An aperture stop 101 is capable of opening to variable values, and adjusts the amount of light entering from the image capture lens 103. A Neutral Density (ND) filter 104 can be selectively inserted into an optical path.

An image capture unit 22 includes an image sensor, and converts the subject image formed by the image capture lens 103 into an analog image signal. The image sensor may be a publicly-known CCD or CMOS color image sensor having, for example, a primary color Bayer array color filter. The image sensor includes a pixel array, in which a plurality of pixels are arranged two-dimensionally, and peripheral circuitry for controlling the operations of each pixel. Each pixel accumulates a charge corresponding to an amount of incident light through photoelectric conversion. By reading out, from each pixel, a signal having a voltage corresponding to the charge amount accumulated during an exposure period, a group of pixel signals (analog image signals) representing the subject image formed on the image capture surface is obtained. An A/D converter 23 converts the analog image signal obtained by the image capture unit 22 into a digital image signal (image data). The A/D converter 23 outputs the image data to an image processing unit 24 or a memory control unit 15.

The image processing unit 24 generates signals and image data for different purposes, obtains and/or generates various types of information, and the like by applying predetermined image processing to the image data output by the A/D converter 23 or the memory control unit 15. The image processing unit 24 may be a dedicated hardware circuit, such as an Application Specific Integrated Circuit (ASIC) designed to implement a specific function, for example. Alternatively, the image processing unit 24 may be constituted by a processor such as a Digital Signal Processor (DSP) or a Graphics Processing Unit (GPU) executing software to implement a specific function. The image processing unit 24 outputs the obtained or generated information, data, and the like to the system control unit 50, the memory control unit 15, or the like, depending on the purpose of use.

The image processing applied by the image processing unit 24 can include pre-processing, color interpolation processing, correction processing, detection processing, data processing, evaluation value calculation processing, special effect processing, and the like, for example.

The pre-processing includes signal amplification, reference level adjustment, defective pixel correction, and the like.

The color interpolation processing is performed when the image sensor is provided with a color filter, and interpolates the values of color components that are not included in the individual pixel data constituting the image data. Color interpolation processing is also called "demosaicing".

The correction processing can include white balance adjustment, tone adjustment, correction of image degradation caused by optical aberrations in the image capture lens 103 (image restoration), correction of the effects of vignetting in the image capture lens 103, color correction, and the like.

The detection processing includes detecting a feature region (e.g., a face region or a human body region) or motion in such a region, processing for recognizing a person, or the like.

The data processing can include cropping a region (trimming), combining, scaling, encoding and decoding, and header information generation (data file generation). The generation of display image data and recording image data is also included in the data processing.

The evaluation value calculation processing can include processing such as generating signals, evaluation values, and the like used in automatic focus detection (AF), generating evaluation values used in automatic exposure control (AE), and the like.

The special effect processing includes adding bokeh effects, changing color tones, relighting processing, and the like.

Note that these are examples of processing that can be applied by the image processing unit 24 and are not intended to limit the processing applied by the image processing unit 24.

The system control unit 50 is a processor (a CPU, an MPU, a microprocessor, or the like) capable of executing programs, for example. The system control unit 50 controls the operations of the respective units of the image capture apparatus 100, and implements the functions of the image capture apparatus 100, by loading programs stored in a non-volatile memory 56 into a system memory 52 and executing the programs.

The non-volatile memory 56 may be electrically rewriteable. The non-volatile memory 56 stores programs executed by the system control unit 50, values of settings in the image capture apparatus 100, GUI data, and the like. The system memory 52 is used to load programs executed by the system control unit 50. Note that a memory 32 (described later) and the system memory 52 may be different regions in the same memory space.

A gyro 40 is a motion sensor that outputs a signal based on an angular velocity about each axis of a Cartesian coordinate system, including an optical axis direction of the image capture apparatus 100 and a direction of gravity. Note that an accelerometer that outputs a signal based on motion in each axis direction may be used in combination therewith. The system control unit 50 is capable of executing optical image stabilization by driving the shift lens to cancel out motion of the image capture apparatus 100 based on the output of the gyro 40. Note that the system control unit 50 may execute electronic image stabilization.

The memory 32 is used as a buffer for display image data, recording image data, intermediate image data generated during image processing by the image processing unit 24, image data read out from a recording medium 200, audio data accompanying moving images, and the like. Part of the memory 32 is also used as a video memory for a display unit 28.

A D/A converter 13 converts image data for display, stored in a video region of the memory 32, into an analog signal that can be displayed by the display unit 28, and supplies the analog signal to the display unit 28. The display image data is displayed by the display unit 28 in this manner. The display unit 28 may be, for example, a liquid crystal display (LCD) or an organic EL display. The display unit 28 is provided on a surface of the housing of the image capture apparatus 100 or the inside thereof, for example.

The display unit 28 can be caused to function as an electronic viewfinder (EVF) by continuously shooting a moving image and displaying the shot moving image. The moving image when the display unit 28 is caused to function as an EVF is called a "live view image".

A system timer 53 measures time using an internal clock. The system control unit 50 can use the time measured by the system timer 53 for various types of control. A mode change switch 60, a recording switch 61, and an operation unit 70 are input devices through which a user of the image capture apparatus 100 inputs various types of instructions.

The mode change switch 60 sets the image capture apparatus 100 to one of predetermined operating modes, such as a moving image recording mode, a playback mode, and the like, for example. The recording switch 61 switches between an image capture standby state and an image capture state for moving images. Upon detecting the recording switch 61 being operated while in the image capture standby state, the system control unit 50 controls various units to execute operations involved in moving image recording. Then, upon detecting the recording switch 61 being operated while recording a moving image, the system control unit 50 controls various units to stop the operations involved in moving image recording.

"Operation unit 70" is a collective name for input devices (buttons, switches, dials, and the like) provided in the image capture apparatus 100. The input devices constituting the operation unit 70 are named according to the functions assigned thereto. For example, the operation unit 70 includes a menu button, a directional key, a set key, and the like. Note that the functions assigned to the same input device may be variable. Additionally, the input devices may include software buttons or keys which use a touchscreen. The operation unit 70 may also include an input device that corresponds to a non-contact input method, such as voice input, gaze input, or the like.

A power control unit 80 is constituted by a battery detection circuit, a DC-DC converter, switch circuits for switching the blocks that are electrified, and the like. The power control unit 80 detects whether a battery is attached, the type of the battery, and the remaining battery power. The power control unit 80 also controls the DC-DC converter based on the detection results and instructions from the system control unit 50, and supplies a necessary voltage for a necessary period to the various units, including the recording medium 200.

A power source unit 30 may be a battery or an AC adapter. An interface (I/F) 18 connects the image capture apparatus 100 (the system control unit 50) to the recording medium 200 in a communication-enabling manner, which may be a memory card, an external device such as the display control apparatus 300, and the like, for example. The I/F 18 has a configuration that complies with a standard of the connected device. The system control unit 50 can send information from the image capture apparatus 100 to an external device such as the display control apparatus 300, receive information and instructions from the external device, and the like through the I/F 18.

The viewpoint detection apparatus 500 is an apparatus that detects a viewpoint (a three-dimensional position, orientation, or image capture direction) of the image capture apparatus 100. The viewpoint detection apparatus 500 can detect the viewpoint of the image capture apparatus 100 using any publicly-known method. The viewpoint detection apparatus 500 can detect the viewpoint of the image capture apparatus 100 based on the image coordinates of markers which are arranged in a shooting space at known three-dimensional positions, for example. Note that the orientation of the image capture apparatus 100 may be detected using the output of the gyro 40. The viewpoint detection apparatus 500 is attached to the image capture apparatus 100 such that the position thereof relative to the image capture apparatus 100 does not change. The viewpoint detection apparatus 500 continuously detects the viewpoint and supplies a detection result to the display control unit 300 through the image capture apparatus 100. Note that the viewpoint detection apparatus 500 may supply the detection result directly to the display control unit 300.

Based on viewpoint information of the image capture apparatus 100 and an installation position of the display device 400 that displays a background image in the image capture space, the display control apparatus 300 generates the background image to be displayed on the display device 400. The background image is an image of a virtual space at the position of the display surface of the display device 400 when the virtual space is observed from the viewpoint of the image capture apparatus 100. The background image can be generated by projecting an image in which a three-dimensional model of the virtual space has been rendered using the viewpoint of the image capture apparatus 100 onto the display surface of the display device 400.

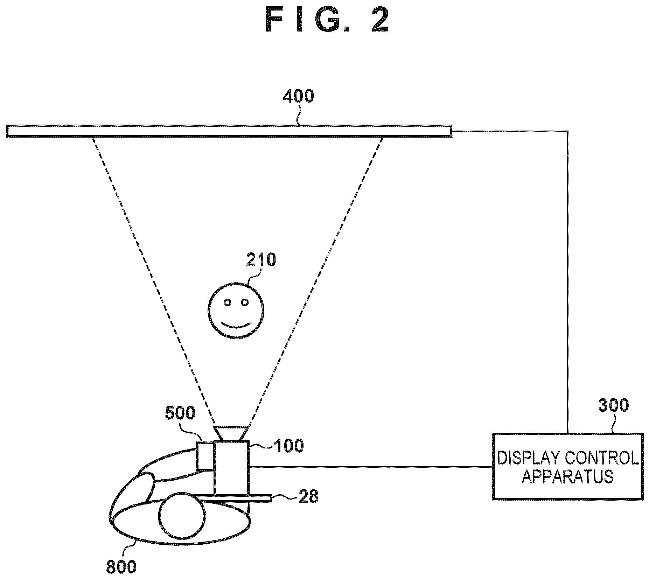

FIG. 2 is a schematic diagram illustrating the capturing of in-camera VFX video using the virtual studio system illustrated in FIG. 1. This figure illustrates the virtual studio from above.

The image capture apparatus 100, which is held by a photographer 800, records in-camera VFX video by capturing an image of a person 210, who serves as a main subject, using the image displayed on the display device 400 as the background. The dotted lines indicate the horizontal field of view of the image capture apparatus 100.

The display control apparatus 300 is connected to the image capture apparatus 100 and the display device 400, and generates the background image, an image for assisting the capturing of the in-camera VFX video by the image capture apparatus 100, and the like. The viewpoint detection apparatus 500 is attached to the image capture apparatus 100, and detects the viewpoint of the image capture apparatus 100. The detection result from the viewpoint detection apparatus 500 is supplied to the display control apparatus 300 via the image capture apparatus 100 or directly.

Note that a synchronization signal is supplied to the image capture apparatus 100, the viewpoint detection apparatus 500, the display device 400, and the display control apparatus 300 from a reference clock generation apparatus, which is also called a sync generator. An image capture period of the image capture apparatus 100 and a display period of the display device 400 are synchronized by each of those apparatuses controlling their operation timings in accordance with the reference clock. Techniques for synchronizing operations between the apparatuses based on a reference clock are known as generator locking, for example, and those operations will therefore not be described in detail.

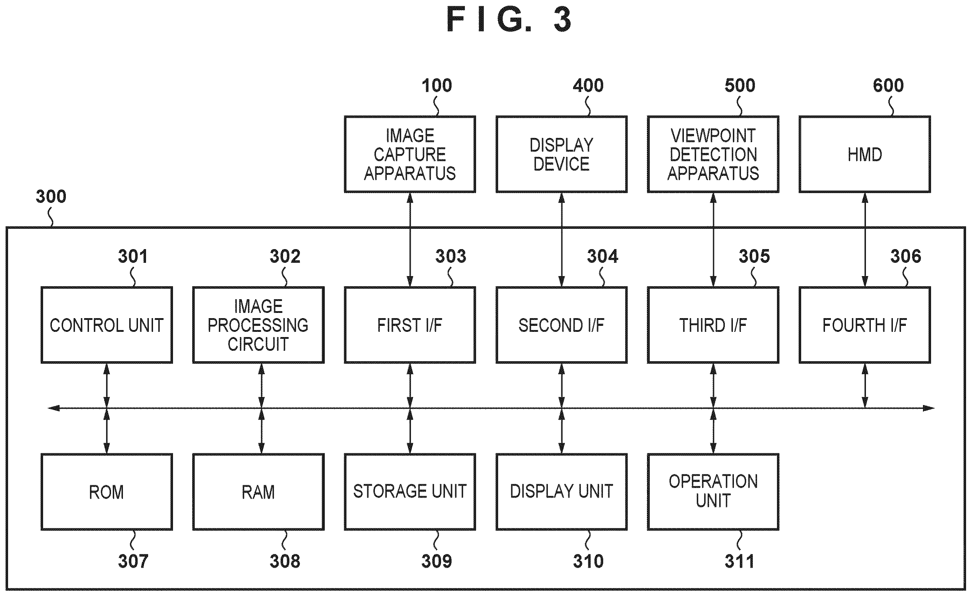

FIG. 3 is a block diagram illustrating an example of the functional configuration of the display control apparatus 300. The display control apparatus 300 can be implemented using a computer device, for example.

A control unit 301 is a CPU, for example, and implements the functions of the display control apparatus 300 by loading one or more application programs stored in a ROM 307 into a RAM 308 and executing those programs. Note that the control unit 301 controls the timing of operations by the display control apparatus 300 in accordance with the synchronization signal supplied from the reference clock generation apparatus.

An image processing circuit 302 is, for example, a graphics board including a GPU. The image processing circuit 302 is capable of executing image processing, such as rendering computer graphics images (CG images), at high speeds.

A first I/F 303 to a fourth I/F 306 are communication interfaces that connect external devices. The present embodiment assumes that the image capture apparatus 100 is connected to the first I/F 303, the display device 400 is connected to the second I/F 304, the viewpoint detection apparatus 500 is connected to the third I/F 305, and the HMD 600, which is optional, is connected to the fourth I/F. The first I/F 303 to the fourth I/F 306 are assumed to be compliant with standards based on the type of external device to be connected and the signal to be communicated. Although the display control apparatus 300 and the external devices are illustrated as being connected through a single I/F for the sake of simplicity, these apparatuses may be connected using a plurality of I/Fs.

The control unit 301 obtains captured image data from the image capture apparatus 100 through the first I/F 303. When obtaining information on the viewpoint of the image capture apparatus 100 from the image capture apparatus 100, the control unit 301 obtains the information through the first I/F 303. However, the control unit 301 may obtain the information on the viewpoint of the image capture apparatus 100 from the viewpoint detection apparatus 500 by communication through the third I/F 305. The control unit 301 outputs image data for display (background image data) to the display device 400 through the second I/F 304. The control unit 301 can also output display image data which assists in the capturing of in-camera VFX video to the image capture apparatus 100 through the first I/F 303, or to the HMD 600 through the fourth I/F 306. Note that the display control apparatus 300 may have at least five interfaces for communicating with external devices.

The ROM 307 stores some programs executed by the control unit 301 (a BIOS, a bootstrap loader, firmware, and the like), values of settings of the display control apparatus 300, and the like.

The RAM 308 is used as a main memory of the control unit 301, as well as a working memory for the image processing circuit 302 and a video memory for a display unit 310.

A storage unit 309 is a high-capacity storage device such as a hard disk, an SSD, or the like. The storage unit 309 stores basic software (an OS), application programs, user data, and the like. An application program that generates a background image that is based on the viewpoint of the image capture apparatus 100 (e.g., a game engine application), and data required to generate the background image (a three-dimensional model of the virtual space, textures, and the like) are also stored in the storage unit 309.

The display unit 310 is a liquid crystal display device, for example. The display unit 310 may be a touchscreen. The display unit 310 displays a background image generation application (e.g., a game engine), a GUI provided by the OS, and the like.

An operation unit 311 includes a plurality of input devices which can be operated by a user, such as a keyboard, a mouse, a touch pad, and the like. If the display unit 310 is a touchscreen, the touch panel is a constituent element of the operation unit 311.

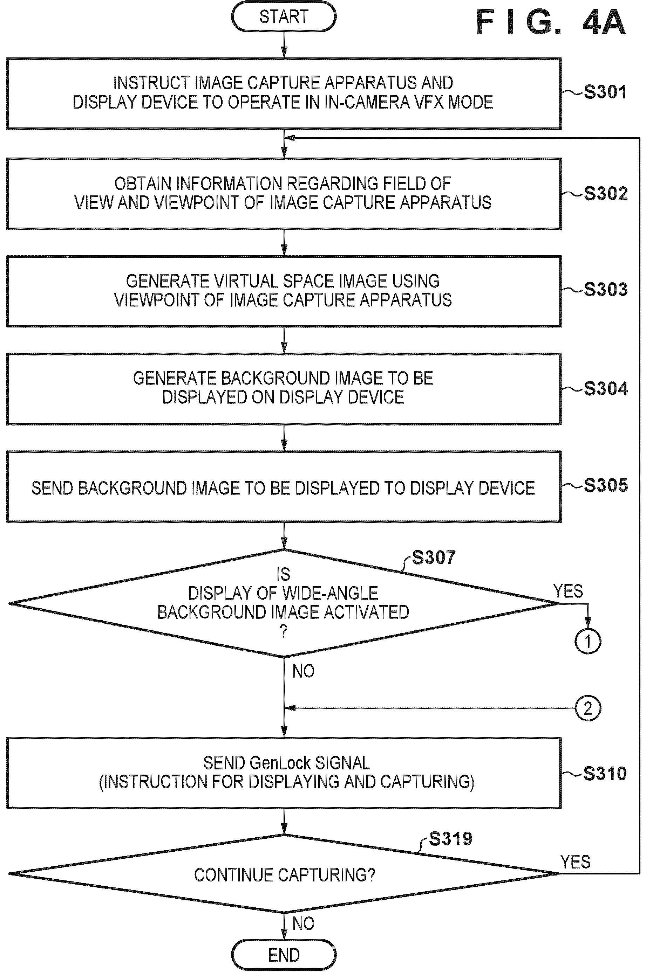

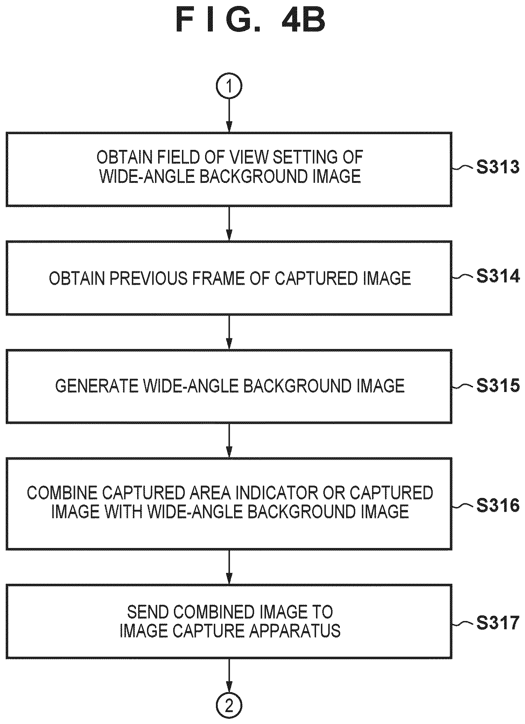

Operations performed by the display control apparatus 300 will be described with reference to the flowcharts illustrated in FIGS. 4A and 4B. Unless otherwise noted, the operations described below are implemented by the control unit 301 of the display control apparatus 300 executing programs stored in the ROM 307 and/or the storage unit 309.

In step S301, the control unit 301 instructs the image capture apparatus 100 and the display device 400 to operate in an in-camera VFX mode. This instruction can be made using any publicly-known method, such as, for example, sending a command, changing the voltage at a specific terminal, or the like. In the in-camera VFX mode, the image capture apparatus 100 and the display device 400 operate at timings that are based on synchronization control signals (Genlock signals) sent from the display control apparatus 300. If the viewpoint detection apparatus 500 is independent from the image capture apparatus 100, the control unit 301 also instructs the viewpoint detection apparatus 500 to operate in the in-camera VFX mode.

In step S302, the control unit 301 obtains information regarding a shooting area (the field of view of the image capture lens 103) and the viewpoint (the three-dimensional position and orientation) of the image capture apparatus 100. Unless noted otherwise, the field of view is assumed to be expressed using the lens focal length (in mm) converted to 35 mm. If the image capture lens 103 is a fixed focal length lens, the information on the field of view can be set in advance, and therefore need not be obtained. The information on the viewpoint of the image capture apparatus 100 can be obtained directly from the viewpoint detection apparatus 500 or through the image capture apparatus 100 as a result of the detection by the viewpoint detection apparatus 500.

In step S303, the control unit 301 sets a virtual camera having the viewpoint of the image capture apparatus 100 using the image processing circuit 302, and generates a virtual space image (a first image) by rendering a three-dimensional model of the virtual space stored in advance in the storage unit 309. As a result, a virtual space image in which the virtual space expressed by the three-dimensional model is seen from the viewpoint of the image capture apparatus 100 is generated. The three-dimensional model is information expressing the three-dimensional shape of a virtual object that is present farther than the display device 400 from the viewpoint of the image capture apparatus 100, and can be written in any publicly-known format.

Note that the size of the virtual space image generated in step S303 (the number of pixels in the horizontal direction and the vertical direction) is greater than the display resolution of the display device 400 in the horizontal direction and the vertical direction. In other words, the control unit 301 generates a virtual space image having a broader area than the area displayed as the background image in the display device 400.

In step S304, using the image processing circuit 302, the control unit 301 generates, from the virtual space image generated in step S303, a background image to be displayed on the display device 400, based on the relationship between a position where the display surface of the display device 400 is present and the viewpoint of the image capture apparatus 100. For example, when the image capture direction of the image capture apparatus 100 is orthogonal to the display surface of the display device 400, the image processing circuit 302 can generate the background image by cropping out an image of the size of the display region from the virtual space image that is based on the viewpoint of the image capture apparatus 100. If the image capture direction of the image capture apparatus 100 is not orthogonal to the display surface of the display device 400, the image processing circuit 302 generates the background image by applying a geometric transform as necessary such that the image is seen from a position directly opposite the display device 400.

In step S305, the control unit 301 sends the background image to the display device 400.

In step S306, the control unit 301 determines whether the display of a wide-angle background image is active, executes step S313 if so, and executes step S310 if not. Whether the display of the wide-angle background image is active can be determined, for example, by confirming the settings of the application, but any other method can be used.

In step S313, the control unit 301 obtains a field of view setting of the wide-angle background image from the ROM 307 or the storage unit 309, for example.

In step S314, the control unit 301 obtains an image of the previous frame captured by the image capture apparatus 100 from the image capture apparatus 100. Note that when the captured image is not combined with the wide-angle background image, or when the combining is performed by the image capture apparatus 100, this step need not be executed. Alternatively, the stated image may be obtained at another time, such as in step S320, and stored in the RAM 309.

In step S315, the control unit 301 generates the wide-angle background image using the image processing circuit 302. The wide-angle background image is a virtual space image in which the virtual space is seen from the viewpoint of the image capture apparatus 100. Unlike when generating the background image, the distance or angle between the display device 400 and the image capture apparatus 100 need not be considered when generating the wide-angle background image.

In step S316, the control unit 301 generates, using the image processing circuit 302, a combined image in the captured image from the previous frame or an indicator indicating the captured area captured by the image capture apparatus 100 has been combined with the wide-angle background image. Note that when the combining is executed by the image capture apparatus 100, step S316 need not be executed.

In step S317, the control unit 301 sends the combined image (or the wide-angle background image) to the image capture apparatus 100. Note that the destination need not be the image capture apparatus 100, and may instead be another apparatus that displays an image (e.g., the HMD 600).

In step S310, the control unit 301 sends a Genlock signal as an instruction for capturing and displaying an image to the image capture apparatus 100 and the display device 400. As a result, the updating of the background image in the display device 400 and the capturing of the next frame by the image capture apparatus 100 are performed in synchronization.

In step S319, the control unit 301 determines whether to continue capturing in-camera VFX video, repeats the operations from step S302 if so, and ends the operations illustrated in the flowcharts of FIGS. 4A and 4B if not. Whether to continue capturing images can be determined based on any desired condition, such as whether a predetermined image capture sequence has ended, whether the image capture apparatus 100 has made a notification indicating that the capturing has ended, or the like.

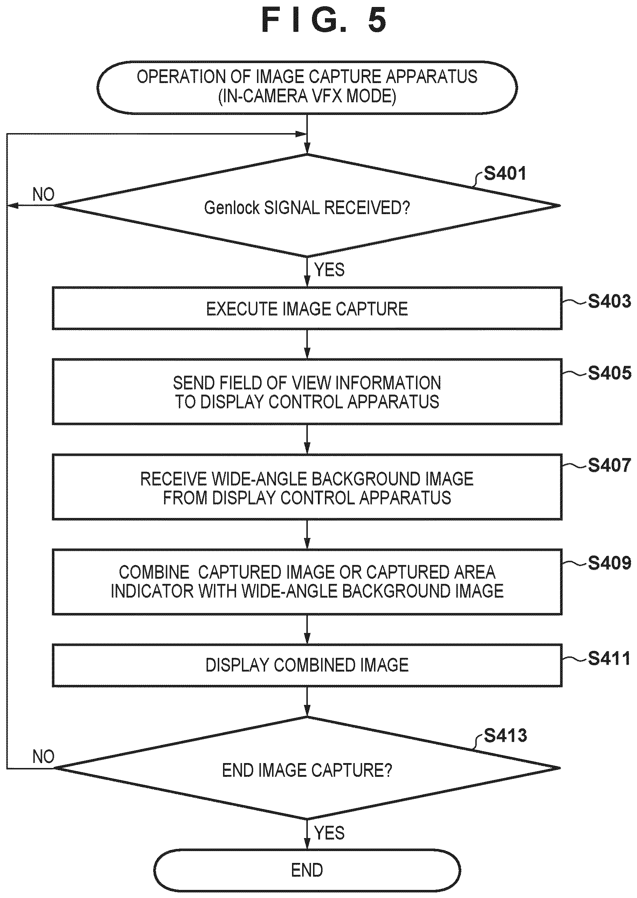

Operations performed by the image capture apparatus 100 in the in-camera VFX mode will be described next with reference to the flowchart in FIG. 5. Unless mentioned otherwise, the operations described below are implemented by the system control unit 50 of the image capture apparatus 100 executing a program stored in the non-volatile memory 56.

In S401, the system control unit 50 determines whether a Genlock signal has been received from the display control apparatus 300, executes S403 if the Genlock signal has been received, and repeats S401 if not. In the in-camera VFX mode, taking the Genlock signal as an image capture start instruction, the system control unit 50 captures an image of one frame. This makes it possible to capture images in synchronization with the display in the display device 400, which also operates in accordance with Genlock signal.

In S403, the system control unit 50 captures an image of one frame using the image capture unit 22. The system control unit 50 controls the image processing unit 24 and the like to generate one frame's worth of image data, which is then stored in the memory 32. Note that the image data generated in step S403 is image data for recording and image data for display if recording is in progress, and is image data for display when in the standby state.

In S405, the system control unit 50 sends information on the state of the image capture apparatus 100 during image capture to the display control apparatus 300 through the I/F 18. The information sent here is assumed to include at least information about the field of view (the focal length of the image capture lens 103). Other information, such as whether the display of the wide-angle background image is active or inactive, the field of view setting of the wide-angle background image, information on exposure, and information on the three-dimensional position and orientation of the image capture apparatus 100 detected by the viewpoint detection apparatus 500, may also be included as necessary.

If the display control apparatus 300 generates a combined image of the wide-angle background image and the captured image, the data of the captured image generated in S403 can be sent to the display control apparatus 300 in response to a request from the display control apparatus 300, for example, between S405 and S407. Alternatively, the data may be sent in step S405, along with the information on the field of view at the time of image capture.

When sending the data of the captured image to the display control apparatus 300, the data of a captured image reduced by the image processing unit 24 in accordance with the display size of the combined image or the wide-angle background image can be sent. The reduction rate of the captured image may be determined based on a difference between the field of view of the captured area and the field of view of the wide-angle background image.

In S407, the system control unit 50 receives the wide-angle background image from the display control apparatus 300 through the I/F 18 and stores the wide-angle background image in the memory 32.

In S409, using the image processing unit 24, the system control unit 50 generates a combined image in which an image indicating the current captured area is combined with the wide-angle background image. For example, the system control unit 50 generates a combined image in which an image of the frame captured in S403, an indicator indicating the captured area, and the like are combined at a corresponding position in the wide-angle background image. When combining the captured image, the image is reduced in the same manner as when sending to the display control apparatus 300, and is aligned with the wide-angle background image. As described with reference to the flowchart in FIGS. 4A and 4B, if the display control apparatus 300 is to generate a similar combined image, the combined image has already been received in S407, and thus the generation need not be performed in S409.

In step S411, the system control unit 50 stores the combined image in the video memory region of the memory 32, and displays the combined image on the display unit 28 through the D/A converter 13. Note that the combined image may be displayed on an external display device connected to the image capture apparatus 100, or on a display device different from the display unit 28 provided in the image capture apparatus 100.

In S413, the system control unit 50 determines whether to continue capturing in-camera VFX video, repeats the operations from S401 if so, and ends the operations illustrated in the flowchart of FIG. 5 if not. Whether to continue capturing the video can be determined based on any desired condition, such as whether an instruction to end capturing images has been made by operating the operation unit 70 or the recording switch 61, whether the display control apparatus 300 has made a notification indicating that the capturing has ended, or the like.

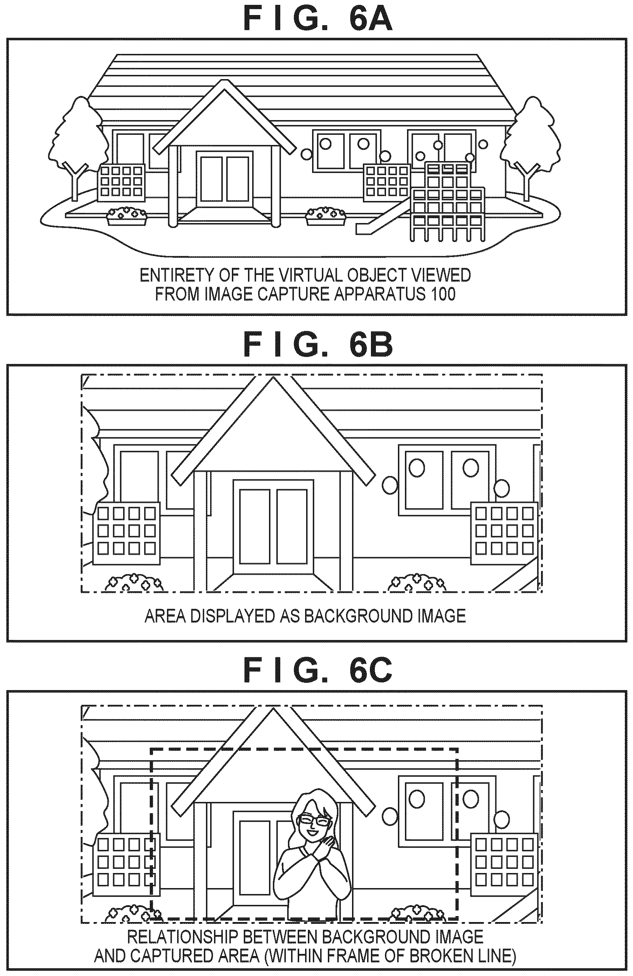

A specific example of the display will be described with reference to FIGS. 6A to 6C. To simplify the descriptions and facilitate understanding, it is assumed here that the virtual space is one in which a virtual object of a building is present, and the image capture apparatus 100 is facing the virtual object, as illustrated in FIG. 6A. The virtual object is also assumed to appear larger than the display surface at the distance of the display device 400 from the image capture apparatus 100. As such, only a part of the virtual object is displayed in the display device 400, and the photographer cannot recognize what the entirety of the virtual object is simply by observing the display device 400.

FIG. 6B illustrates an example of the background image. This corresponds to a region displayed in the display device 400, of the virtual space image which is generated by the display control apparatus 300 and is to be observed at the position of the display surface of the display device 400 from the viewpoint of the image capture apparatus 100.

FIG. 6C illustrates an example of the relationship between the background image and the captured area captured by the image capture apparatus 100. The area surrounded by the broken line is the captured area, and in-camera VFX video including a real object such as the one illustrated is captured.

Generally, the image capture apparatus 100 generates a live view image based on captured images, and thus areas outside the captured area are not included. Accordingly, from the display of the display unit 28, the photographer 800 not only cannot recognize what the parts of the virtual space image not displayed in the display device 400 are, but also cannot recognize what the background image outside the captured area is. Capturing an image while looking at both the display device 400 and the display unit 28 does make it possible to recognize what the background image outside the captured area is, but it is still impossible to grasp what the parts of the virtual space image not displayed as the background image are.

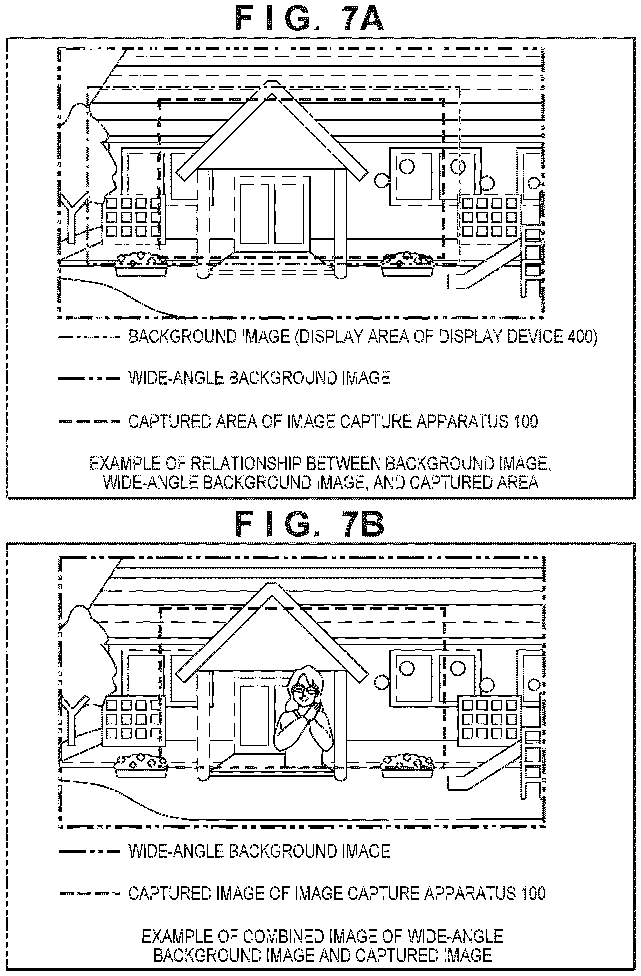

FIG. 7A illustrates an example of the relationship between the background image, the wide-angle background image, and the captured area generated according to the present embodiment, under the same assumptions as those of FIGS. 6A to 6C. In the example illustrated in FIG. 7A, the wide-angle background image is a region of the virtual space image that includes a region of the background image and is larger than the background image. The size (field of view) of the wide-angle background image can be set in advance, or may be dynamically changeable in response to instructions made through the operation unit 70 of the image capture apparatus 100. Alternatively, the size may be set automatically using the current field of view of the image capture apparatus 100 as a reference. The field of view of the wide-angle background image is set not to be lower than the current field of view of the image capture apparatus 100. The wide-angle background image is an image in which the center of the image (the optical axis position) is the same as that of the captured image, but the field of view is different. Accordingly, the wide-angle background image is an image including the surrounding regions outside the captured area.

FIG. 7B illustrates an example of the combined image in which the captured image is combined with the wide-angle background image in the state illustrated in FIG. 7A. Note that the combined image may be a combined image in which an indicator indicating the captured area (e.g., the broken line in FIG. 7A or FIG. 7B) is combined instead of the captured image. To combine the wide-angle background image and the captured image in a natural manner, image processing such as a geometric transform may be applied to the captured image as necessary before the combining, and image processing may be applied to boundary parts of the image after the combining. The photographer 800 can set an appropriate captured area while confirming the state around the captured area by, for example, operating the image capture apparatus 100 while viewing the combined image displayed in the display unit 28.

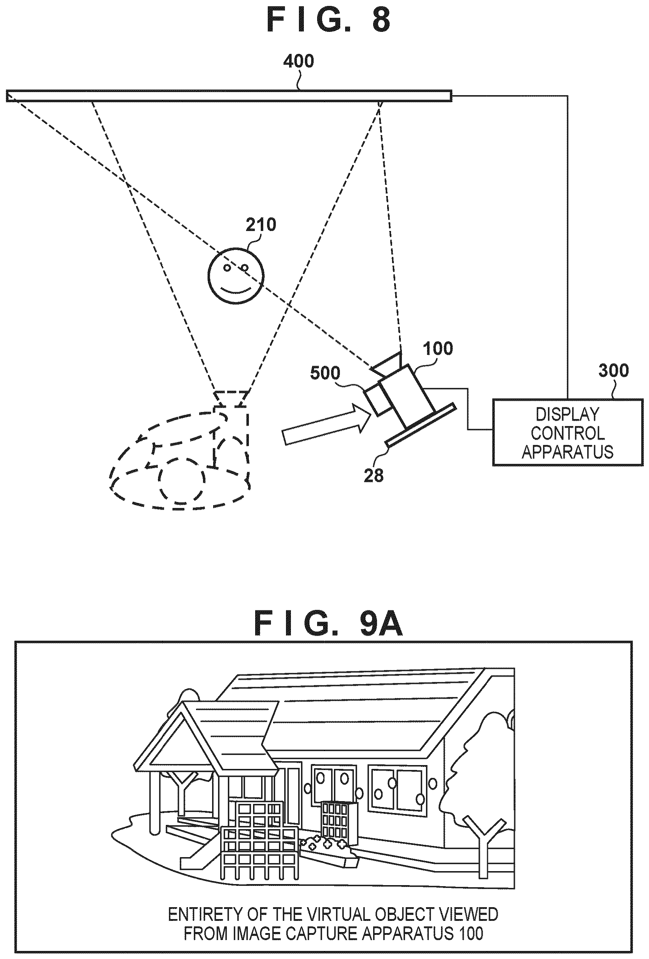

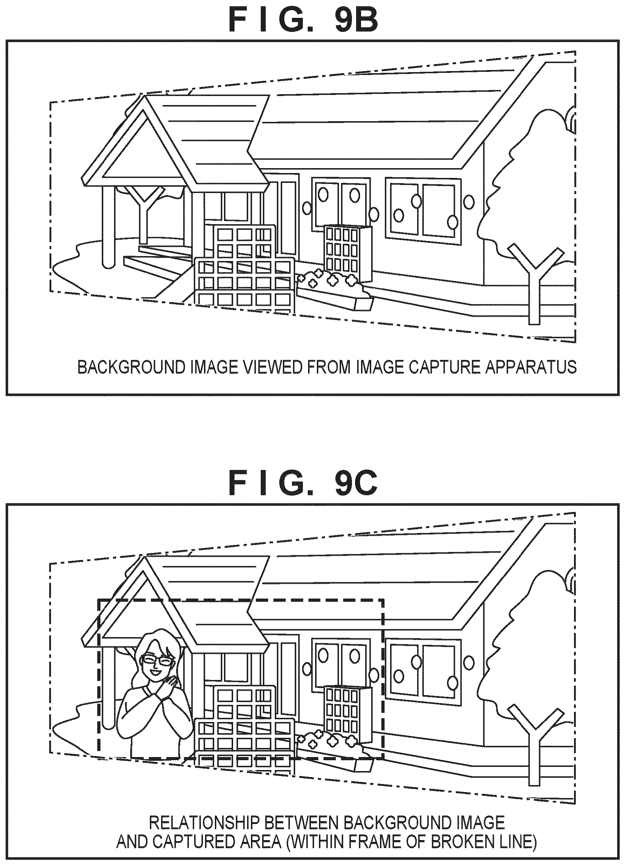

FIG. 8 schematically illustrates a case where the photographer 800 has moved to the right from the state illustrated in FIG. 2 and the image capture apparatus 100 is no longer facing the display device 400. In this case, the angle of the virtual object viewed from the image capture apparatus 100 changes as illustrated in FIG. 9A. Additionally, because the image capture apparatus 100 is no longer facing the display device 400, the background image viewed from the image capture apparatus 100 has a shape such as that indicated in FIG. 9B. The relationship between the background image and the captured area becomes as illustrated in FIG. 9C.

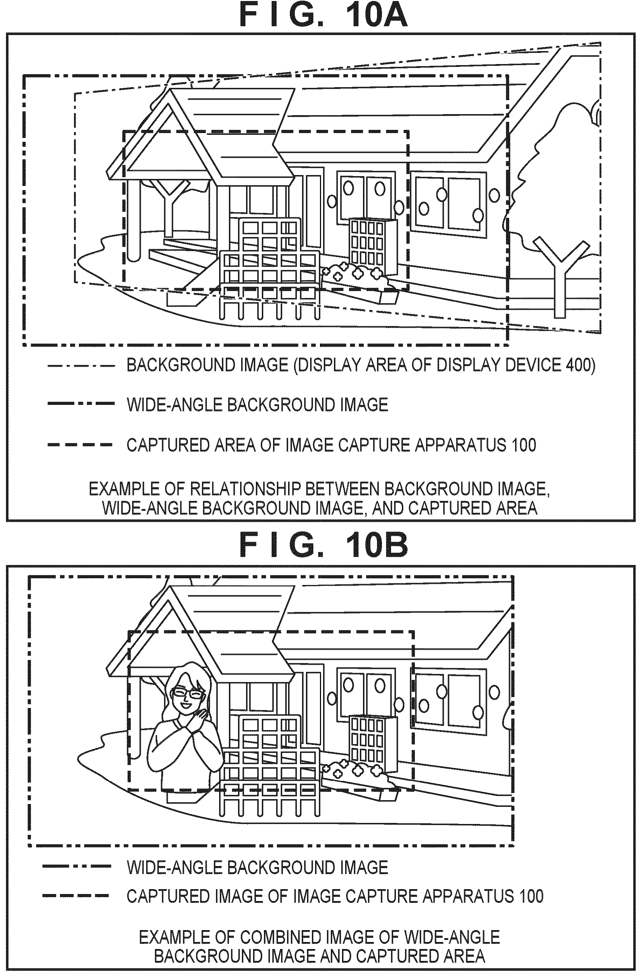

FIG. 10A illustrates an example of the relationship between the background image, the wide-angle background image, and the captured area in the state illustrated in FIG. 8. FIG. 10B illustrates an example of the combined image in the state illustrated in FIG. 10A. In this manner, a wide-angle background image and a combined image that follow changes in the viewpoint of the image capture apparatus 100 are obtained.

### First Variation

The present embodiment has described a case where a part of an image based on the viewpoint of the image capture apparatus, generated by the display control apparatus, is displayed in the display device 400. However, the captured area of the in-camera VFX video is generally set to a smaller area than the display region of the display device 400. Accordingly, the wide-angle background image may be any image that includes the captured area and is larger than the captured area. The background image, for example, may therefore be used as the wide-angle background image.

### Second Variation

Additionally, a combined image in which the captured image or an indicator indicating the captured area has been combined with the wide-angle background image is displayed in the present embodiment. However, the effect of being able to recognize what the area that cannot be confirmed from the background image is can be achieved even if the wide-angle background image is displayed as-is. In particular, a situation where the display device that displays the live view image and the display device that displays the wide-angle background image are separate devices is suitable for a configuration in which the wide-angle background image is displayed as-is.

### Third Variation

An image captured by a separate image capture apparatus having a viewpoint synchronized with that of the image capture apparatus 100 may be used instead of the virtual space image, which is a computer graphics image. In this case, the field of view of the separate image capture apparatus is set such that a larger area than the background image is captured. The field of view of the separate image capture apparatus may be changed in accordance with the field of view setting of the wide-angle background image.

As described above, according to the present embodiment, to assist image capturing by using an image based on a viewpoint of an image capture apparatus as a background image, a wide-angle background image is generated. The wide-angle background image is an image which is based on the viewpoint of the image capture apparatus, includes a captured area, and has a field of view greater than that of the captured area. As a result, a photographer operating the image capture apparatus to appropriately change the captured area of in-camera VFX video while using the wide-angle background image to recoginze the state of the area around the captured area.

### Second Embodiment

A second embodiment of the present invention will be described next. In the first embodiment, the viewpoint of the wide-angle background image was the viewpoint of the image capture apparatus 100. However, in the present embodiment, the wide-angle background image (a second image) is generated from a viewpoint (a second viewpoint) different from the viewpoint of the image capture apparatus 100.

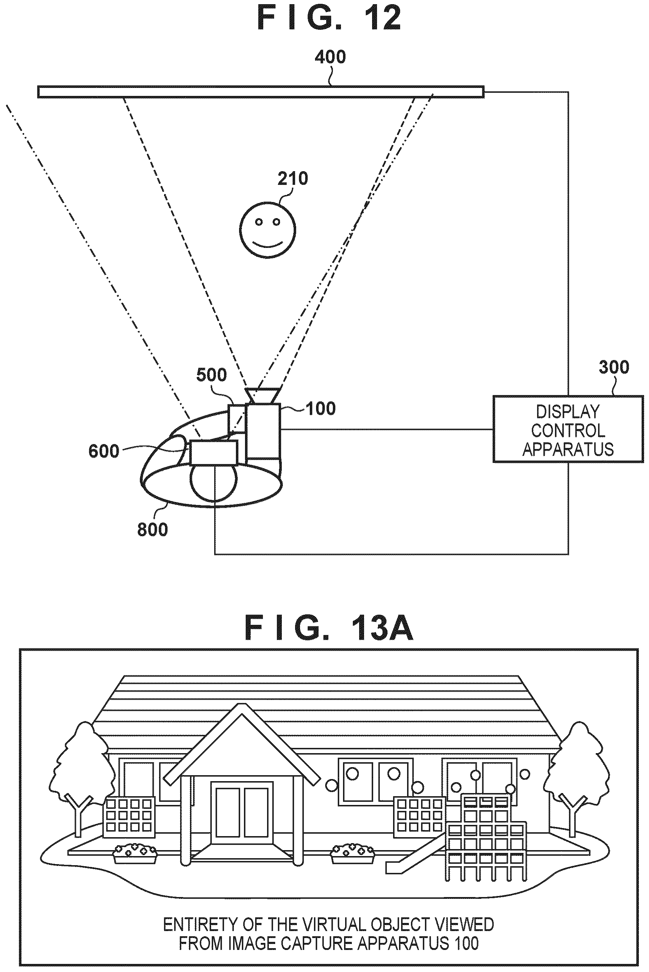

FIG. 12 is a schematic diagram illustrating the capturing of in-camera VFX video in the virtual studio system according to the present embodiment, in the same manner as in FIG. 2. The present embodiment assumes that the wide-angle background image is generated from the viewpoint of the head-mounted display (HMD) 600 worn by the photographer 800. Because the user wears the HMD 600 on their head, the viewpoint of the HMD 600 can also be regarded as the viewpoint of the photographer 800. However, another viewpoint may be used, such as the viewpoint of another member operated by the photographer. In FIG. 12, two dot-dot-dash line extending from the HMD 600 indicate the horizontal field of view of the wide-angle background image displayed in the HMD 600.

The HMD 600 has a function for detecting the viewpoint (the three-dimensional position and position/orientation) of the HMD 600. Information on the detected viewpoint is output to the display control apparatus 300 in response to a request from the display control apparatus 300 (or automatically at a predetermined timing). Note that like the viewpoint of the image capture apparatus 100, the viewpoint of the HMD 600 may be detected using a separate viewpoint detection apparatus. In this case, the information on the detected viewpoint is output from the viewpoint detection apparatus to the display control apparatus 300. FIG. 12 assumes that the viewing direction of the HMD 600 is parallel to the image capture direction (the optical axis direction) of the image capture apparatus 100.

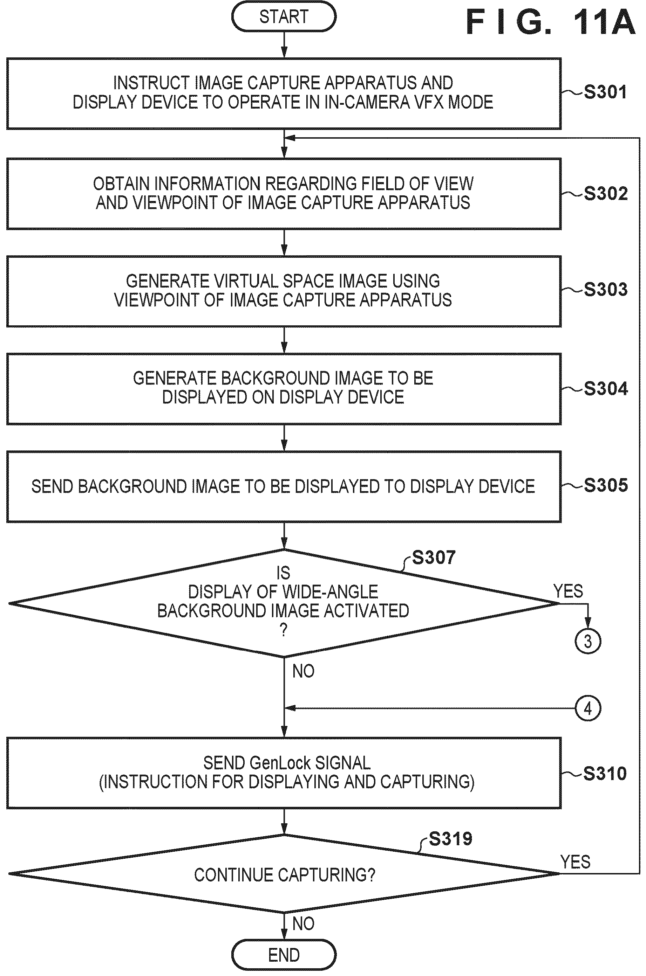

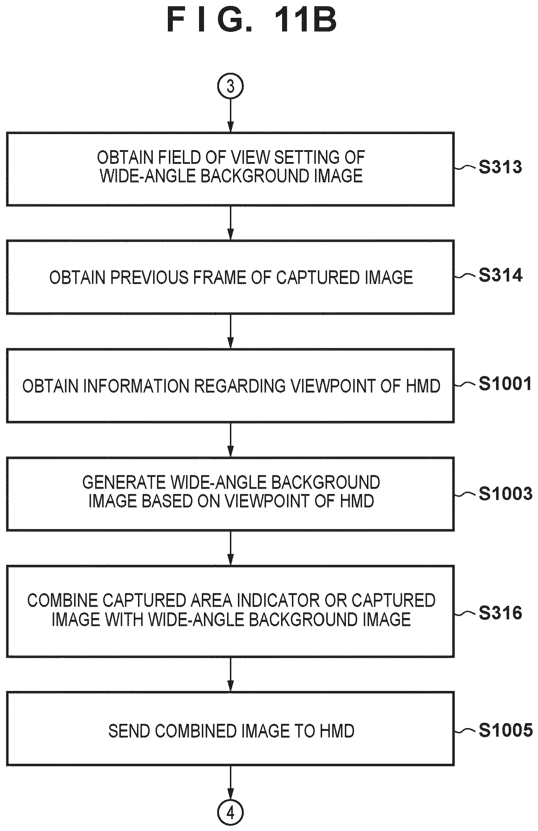

FIGS. 11A and 11B are flowcharts pertaining to operations performed by the display control apparatus 300 according to the present embodiment. Unless otherwise noted, the operations described below are implemented by the control unit 301 of the display control apparatus 300 executing programs stored in the ROM 307 and/or the storage unit 309. In addition, steps in which the same operations as in the first embodiment are performed are given the same reference numerals as those in FIGS. 4A and 4B.

The following will focus on areas different from the first embodiment. When the display of the wide-angle background image is inactive, the operations are the same as in the first embodiment and will therefore not be described here. Even when the display of the wide-angle background image is activated, the operations of steps S301 to S307, S313, and S314 are the same as in the first embodiment. If the captured image is not to be combined with the wide-angle background image, step S314 need not be performed. Note that the field of view of the wide-angle background image is set within the horizontal and vertical fields of view of the HMD 600.

In step S1001, the control unit 301 obtains the information on the viewpoint of the HMD 600. The information can be obtained from the HMD 600 or from a separate viewpoint detection apparatus.

In step S1003, using the image processing circuit 302, the control unit 301 generates a wide-angle background image in which the virtual space is seen from the viewpoint of the HMD 600. Aside from the viewpoints being different, this is the same as the generation of the wide-angle background image performed in step S315 in the first embodiment.

In step S316, the control unit 301 generates, using the image processing circuit 302, a combined image in the captured image from the previous frame or an indicator indicating the captured area captured by the image capture apparatus 100 has been combined with the wide-angle background image. Note that the resolution of the combined image can be adjusted in accordance with the display resolution of the HMD 600.

In step S1005, the control unit 301 the control unit 301 sends the combined image to the HMD 600. The processing thereafter is the same as in the first embodiment.

According to the present embodiment, the image capture apparatus 100 does not display the wide-angle background image, and the operations pertaining to the wide-angle background image described in the first embodiment (S407 to S411 in FIG. 5) are therefore not performed.

The HMD 600 repeatedly sends the information on the viewpoint and displays the combined image received from the display control apparatus 300.

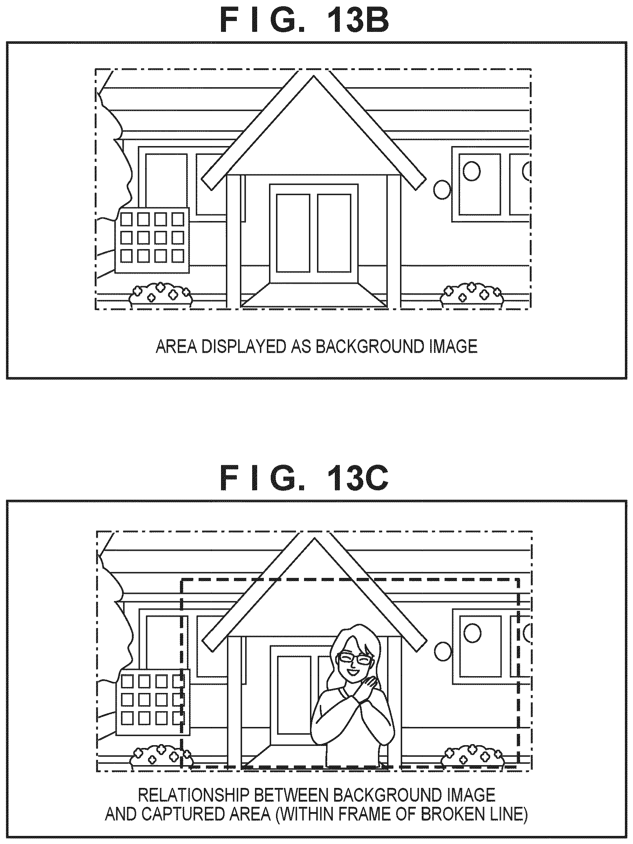

A specific example of the display will be described hereinafter. To simplify the descriptions and facilitate understanding, it is assumed here that the virtual space is one in which a virtual object of a building is present, and the image capture apparatus 100 and the HMD 600 are facing the virtual object, as illustrated in FIG. 13A. Like the first embodiment, the virtual object is also assumed to appear larger than the display surface at the distance of the display device 400 from the image capture apparatus 100. As such, part of the virtual object is displayed in the background image illustrated in FIG. 13B, and the photographer cannot recognize what the entirety of the virtual object is simply by observing the display device 400. FIG. 13C illustrates an example of the relationship between the background image and the captured area captured by the image capture apparatus 100. The area surrounded by the broken line is the captured area, and in-camera VFX video including a real object such as the one illustrated is captured.

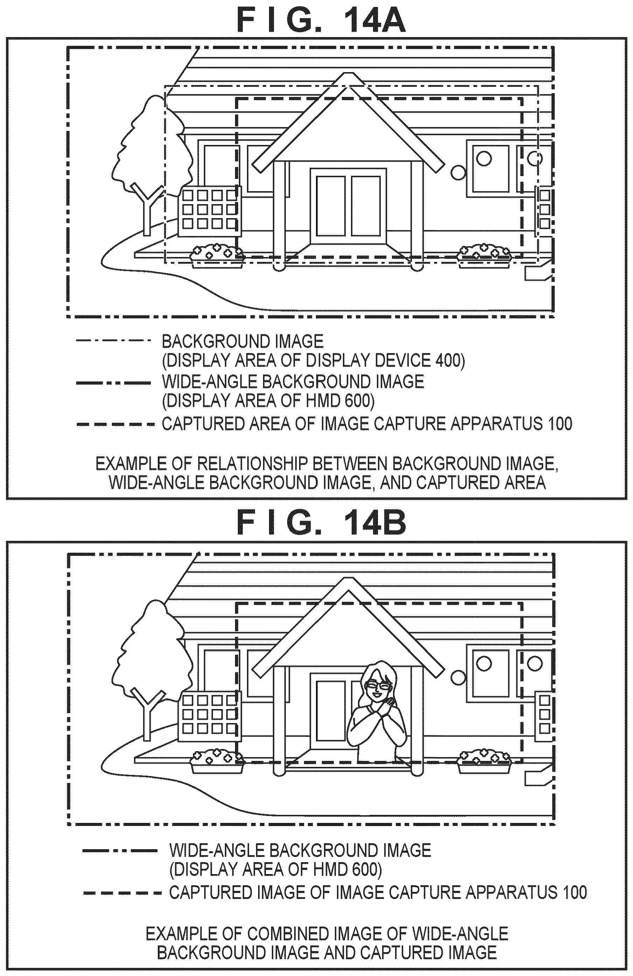

FIG. 14A illustrates an example of the relationship between the background image, the wide-angle background image, and the captured area generated according to the present embodiment, under the same assumptions as those of FIGS. 13A to 13C. As illustrated in FIG. 12, the image capture apparatus 100 and the HMD 600 are facing the display device 400, and thus the background image, the wide-angle background image, and the captured area are expressed as rectangular regions having different centers.

In the present embodiment, the viewpoint of the wide-angle background image is the viewpoint of the HMD 600 rather than the viewpoint of the image capture apparatus 100, and thus the centers of the wide-angle background image and the captured area do not coincide. The wide-angle background image has a wider field of view than the captured area, and includes the background image in the example illustrated in FIG. 14A.

FIG. 14B illustrates an example of the combined image in which the captured image is combined with the wide-angle background image in the state illustrated in FIG. 14A. Note that the combined image may be a combined image in which an indicator indicating the captured area (e.g., the broken line in FIG. 14A or FIG. 14B) is combined instead of the captured image. The photographer 800 wearing the HMD 600 can set an appropriate captured area while confirming the state around the captured area by operating the image capture apparatus 100 while viewing the combined image.

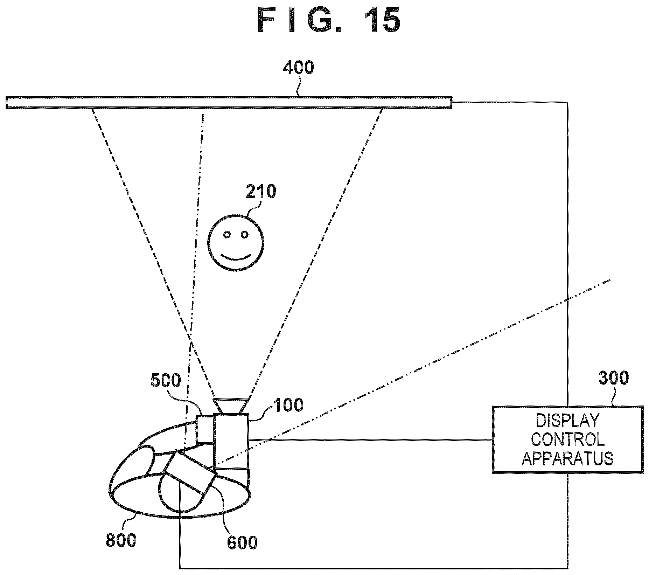

FIG. 15 schematically illustrates a state in which the photographer 800 has moved their line of sight to the right without moving the image capture apparatus 100 in the state illustrated in FIG. 12. In this case, the angle and visible area of the virtual object as viewed from the photographer 800 change.

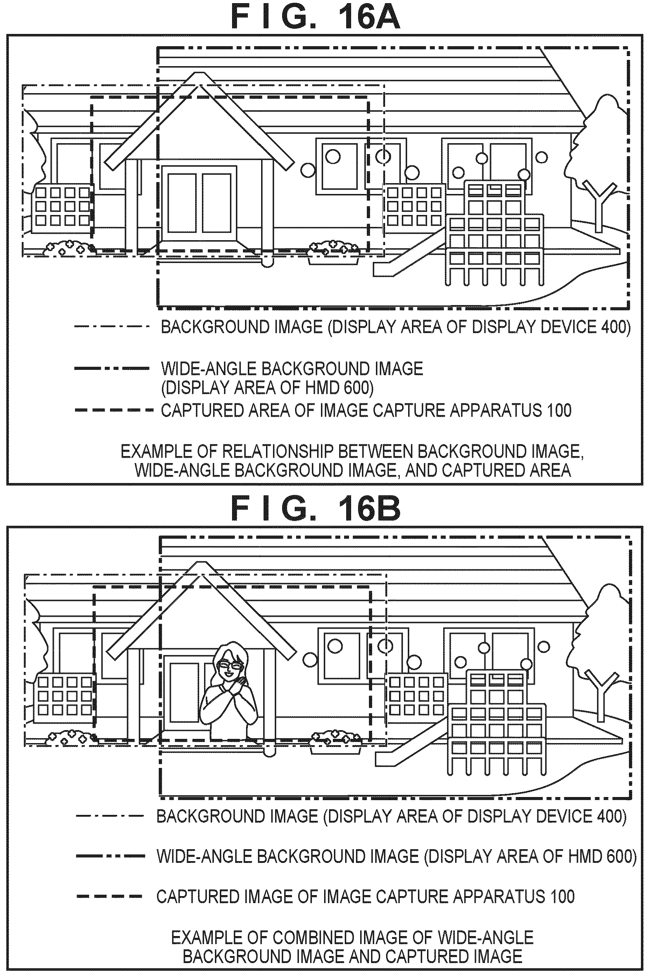

FIG. 16A illustrates an example of the relationship between the background image, the wide-angle background image, and the captured area in the state illustrated in FIG. 15. Note that the wide-angle background image in FIG. 16A indicates that the area of the wide-angle background image displayed in the HMD 600 is moving to the right relative to the background image and the captured area, and the change in the angle of the virtual object is not indicated in order to make the figure easier to view.

FIG. 16B illustrates an example of the combined image in the state illustrated in FIG. 16A. In actuality, the captured image may be transformed in accordance with the angle of the virtual object in the wide-angle background image before the combining is performed. Because the viewing direction of the HMD 600 is being rotated to the right relative to the image capture direction of the image capture apparatus 100, the left side of the captured area is outside the field of view of the wide-angle background image. However, the photographer 800 can recognize the state of the virtual space on the right side of the captured area over a wide range without expanding the field of view of the wide-angle background image.

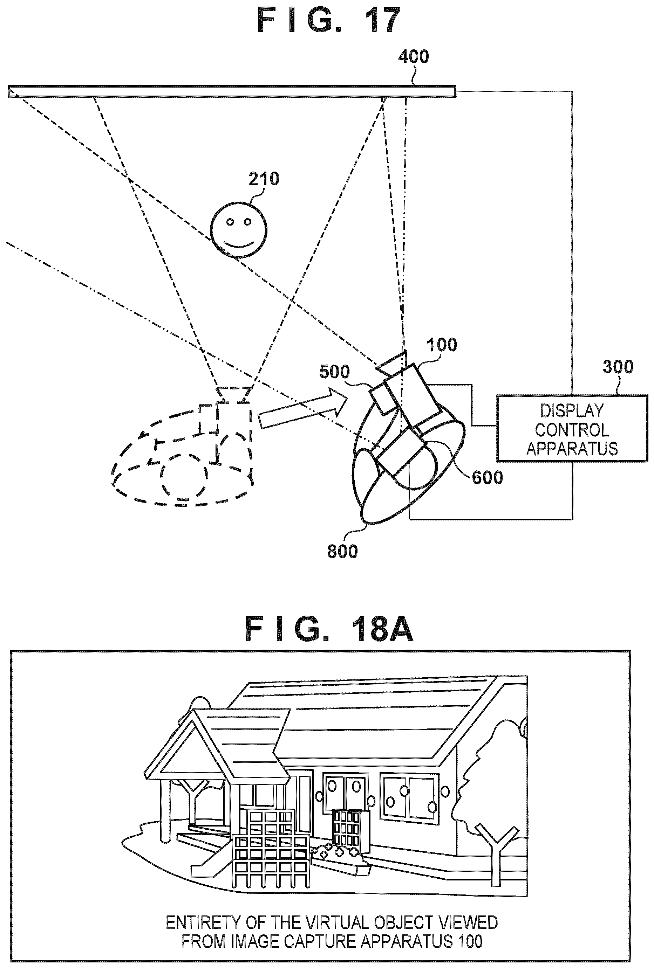

FIG. 17 schematically illustrates a state in which, based on the state of the virtual space recognized from the wide-angle background image, for example, the photographer 800 has changed the position and image capture direction from the state illustrated in FIG. 15 such that a subject 210 is captured at an angle from the right. Here, the viewing direction of the HMD 600 has also changed to be approximately parallel with the image capture direction of the image capture apparatus 100.

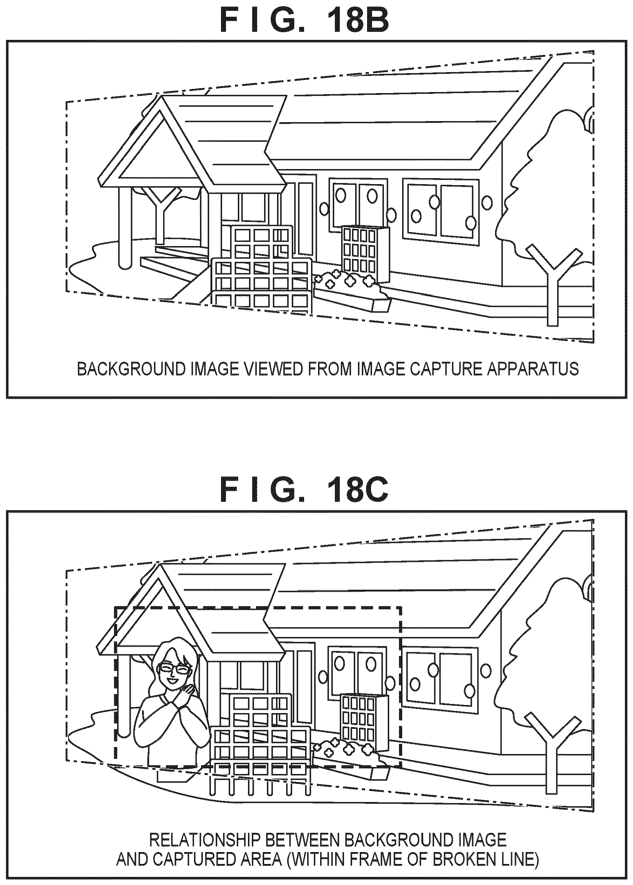

In this case, the angle of the virtual object viewed from the image capture apparatus 100 changes as illustrated in FIG. 18A. Additionally, because the image capture apparatus 100 is no longer facing the display device 400, the background image viewed from the image capture apparatus 100 has a shape such as that indicated in FIG. 18B. The relationship between the background image and the captured area becomes as illustrated in FIG. 18C.

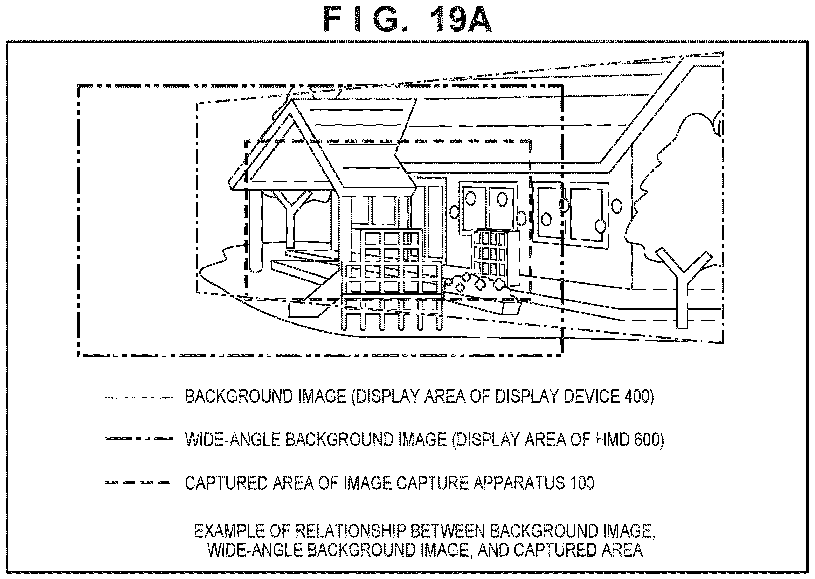

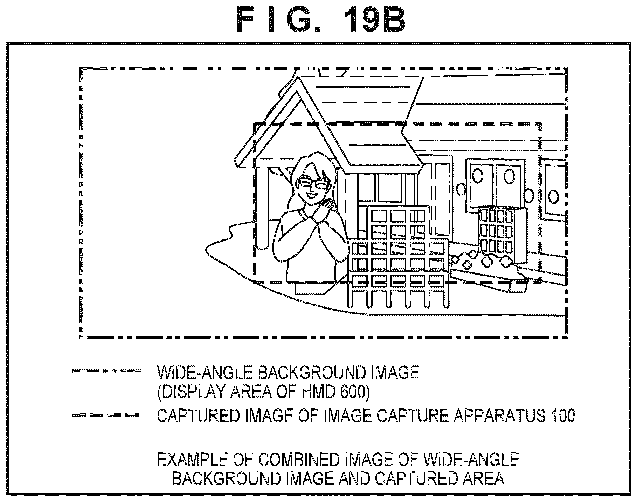

FIG. 19A illustrates an example of the relationship between the background image, the wide-angle background image, and the captured area in the state illustrated in FIG. 17. In FIGS. 19A and 19B too, differences in the shapes of the wide-angle background image and the captured image (the captured area) caused by parallax between the image capture apparatus 100 and the HMD 600 are not illustrated.

FIG. 19B illustrates an example of the combined image in the state illustrated in FIG. 19A. The parallax between the image capture apparatus 100 and the HMD 600 has decreased, and thus the captured area is now included in the wide-angle background image.

According to the present embodiment, in addition to the effects of the first embodiment, generating a wide-angle background image from a viewpoint that is independent of the viewpoint of the image capture apparatus makes it possible to recognize the state of the virtual space over a broader range than in the first embodiment. The variations described in the first embodiment can also be applied in the present embodiment.

Note that in the present embodiment, when the parallax between the HMD 600 and the image capture apparatus 100 increases, a situation may arise in which the captured area is no longer included in the wide-angle background image at all. In this case, the position of the captured area cannot be grasped from the wide-angle background image. Accordingly, if the captured area is not included in the wide-angle background image at all, an indicator indicating the direction in which the captured area is present (e.g., an arrow) may be displayed in the HMD 600 as the combined image obtained by the combination with the wide-angle background image.

### Other Embodiments

The present invention can be implemented by processing of supplying a program for implementing one or more functions of the above-described embodiments to a system or apparatus via a network or storage medium, and causing one or more processors in the computer of the system or apparatus to read out and execute the program. The present invention can also be implemented by a circuit (for example, an ASIC) for implementing one or more functions.

The present invention is not limited to the content of the foregoing embodiments, and many changes and variations can be made without departing from the spirit and scope of the present invention. Therefore, claims have been appended to apprise the public of the scope of the invention.

This application claims priority from Japanese Patent Application No. 2023-28845, filed February 27, 2023, which is hereby incorporated by reference herein.

## Claims

1. An image processing apparatus **characterized by** comprising:
generating means for generating a first image that is based on a viewpoint of an image capture apparatus;
display control means for displaying, on a display device, a part of the first image as a background image in a space captured by the image capture apparatus; and
output means for outputting, to an external device different from the display device, a second image, which is a part of the first image, that includes a portion of the first image corresponding to a captured area captured by the image capture apparatus and that has a greater field of view than the captured area.

2. An image processing apparatus **characterized by** comprising:
generating means for generating a first image that is based on a first viewpoint that is a viewpoint of an image capture apparatus and a second image that is based on a second viewpoint different from the first viewpoint;
display control means for displaying, on a display device, a part of the first image as a background image in a space captured by the image capture apparatus; and
output means for outputting the second image to an external device different from the display device,
wherein the second image has a greater field of view than the first image.

3. The image processing apparatus according to claim 2, **characterized in that** the second viewpoint is a viewpoint of a user operating the image capture apparatus.

4. The image processing apparatus according to claim 2 or 3, **characterized in that** in a case where the second image does not include the captured area captured by the image capture apparatus, the output means outputs the second image in which an indicator indicating a direction in which the captured area is present is combined with the second image.

5. The image processing apparatus according to any one of claims 1 to 4, **characterized in that** the external device is the image capture apparatus.

6. The image processing apparatus according to any one of claims 1 to 4, **characterized in that** the external device is a head-mounted display device (HMD) worn by a user operating the image capture apparatus.

7. The image processing apparatus according to any one of claims 1 to 6, **characterized in that** the output means outputs the second image in which an indicator indicating the captured area captured by the image capture apparatus is combined with the second image.

8. The image processing apparatus according to any one of claims 1 to 6, **characterized in that** the output means outputs the second image in which an image captured by the image capture apparatus is combined with the second image.

9. The image processing apparatus according to any one of claims 1 to 8, **characterized in that** the second image includes a part not included in the background image.

10. The image processing apparatus according to any one of claims 1 to 9, **characterized in that** the first image is a computer graphics image generated based on a three-dimensional model of a virtual space.

11. An image capture apparatus **characterized by** comprising:
obtaining means for obtaining the second image from the image processing apparatus according to any one of claims 1 to 10; and
display means for displaying the second image.

12. The image capture apparatus according to claim 11, **characterized by** further comprising display means, different from the display means, for displaying a live view image.

13. A virtual studio system **characterized by** comprising:
the image processing apparatus according to any one of claims 1 to 10;
the image capture apparatus according to claim 11 or 12; and
a display device that displays the background image.

14. An image processing method executed by an image processing apparatus, the image processing method **characterized by** comprising:
generating a first image that is based on a viewpoint of an image capture apparatus;
displaying, on a display device, a part of the first image as a background image in a space captured by the image capture apparatus; and
outputting, to an external device different from the display device, a second image, which is a part of the first image, that includes a portion of the first image corresponding to a captured area captured by the image capture apparatus and that has a greater field of view than the captured area.

15. A program that causes a computer to function as each means of the image processing apparatus according to any one of claims 1 to 10.
